**Europäisches Patentamt**

**European Patent Office**

**Office européen des brevets**

(11) Veröffentlichungsnummer: **0 408 920 A2**

## (12) EUROPÄISCHE PATENTANMELDUNG

(21) Anmeldenummer: **90111789.5**

(22) Anmeldetag: **21.06.90**

(51) Int. Cl.5: **G02B 26/10**

(30) Priorität: **18.07.89 DE 3923788**

(43) Veröffentlichungstag der Anmeldung:
**23.01.91 Patentblatt 91/04**

(84) Benannte Vertragsstaaten:
**CH DE FR IT LI SE**

(71) Anmelder: **Erwin Sick GmbH Optik-Elektronik**
**Sebastian-Kneipp-Strasse 1**
**D-7808 Waldkirch(DE)**

(72) Erfinder: **Fetzer, Günter**
**Sonnhalde 97a**
**D-7803 Gundelfingen(DE)**
Erfinder: **Jaksic, Zeljko**
**Emmendinger Strasse 12**
**D-7808 Waldkirch(DE)**

(74) Vertreter: **Dipl.-Phys.Dr. Manitz Dipl.-Ing.**
**Finsterwald Dipl.-Ing. Grämkow**
**Dipl.-Chem.Dr. Heyn Dipl.-Phys. Rotermund**
**Morgan, B.Sc.(Phys)**
**Seelbergstrasse 23/25**
**D-7000 Stuttgart 50(DE)**

(54) **Vorrichtung zur Erzeugung eines Lichtvorhanges.**

(57) Es wird eine Vorrichtung zur Erzeugung eines Lichtvorhanges beschrieben, welche einen ursprünglich sphärischen, streifenförmigen Hohlspiegel 10 und eine in der Nähe des Brennpunktes des Hohlspiegels angeordnete Lichtablenkvorrichtung 12 umfaßt. Die Lichtablenkvorrichtung 12 führt einen gebündelten Lichtstrahl periodisch über den Hohlspiegel 10. Der streifenförmige Hohlspiegel 10 ist in sich derart verdreht, daß jedes während einer vollständigen Abtastung vom Lichtstrahl beaufschlagte Flächenelement des Hohlspiegels 10 in einer zur Abtastrichtung senkrechten Ebene zumindest im wesentlichen im gleichen Winkel zur Strahlachse steht.

FIG.1

EP 0 408 920 A2

## VORRICHTUNG ZUR ERZEUGUNG EINES LICHTVORHANGES

Die Erfindung betrifft eine Vorrichtung zur Erzeugung eines Lichtvorhanges mit einem abbildenden, streifenförmigen Hohlspiegel und einer in der Nähe des Brennpunktes des Hohlspiegels angeordneten Lichtablenkvorrichtung, welche einen von einer Strahlungsquelle kommenden, gebündelten Lichtstrahl periodisch über den sich in Abtastrichtung erstreckenden Hohlspiegel führt und/oder einen Empfangsstrahl vom Hohlspiegel empfängt und zu einem photoelektrischen Wandler lenkt, wobei Strahlungsquelle bzw. photoelektrischer Wandler und Lichtablenkvorrichtung einerseits sowie Hohlspiegel und Strahlaustritt bzw. -eintritt andererseits in unterschiedlichen Ebenen liegen.

Indem bei einer derartigen Vorrichtung Strahlungsquelle bzw. photoelektrischer Wandler, Lichtablenk- vorrichtung, Hohlspiegel und Strahlaustritt bzw. -eintritt in zwei verschiedenen Ebenen liegen, wird eine Unterbrechung des Fahrstrahls durch die Abschattung der Ablenkeinheit vermieden. Mit einer solchen Anordnung kann demnach nicht nur die halbseitige, sondern die ganze Öffnung des Systems ausgenutzt werden.

Diese Anordnung in zwei verschiedenen Ebenen hat nun aber zur Folge, daß sich der Scanstrahl entlang des abbildenden streifenförmigen Hohlspiegels nicht mehr auf einer Geraden, sondern auf einer Kreisbahn bewegt. Eine solche Kreisbahn entsteht aufgrund des einen Z-Winkel bildenden Strahlverlaufs und der Tatsache, daß der Ursprungspunkt der Ablenkeinheit nicht im Krümmungsmittelpunkt des Hohlspiegels, sondern in der Nähe des Brennpunktes angeordnet ist. Infolge des Strahlverlaufs entlang der Kreisbahn wird der Strahl in einer zur allgemeinen Abtastrichtung senkrechten Ebene mit unterschiedlichen Winkeln reflektiert. Da somit ein Winkelfehler vorliegt, wird der Betrag der Abweichung mit zunehmendem Abstand vom Hohlspiegel größer.

Bei einer aus der DE-AS 26 22 113 bekannten Vorrichtung der eingangs genannten Art wird dieser Geradlauffehler zwar durch eine planparallele Platte teilweise kompensiert. Bei einer solchen Korrekturplatte handelt es sich jedoch um ein relativ großes, genaues und damit teures Bauteil.

Aus der DE 35 14 302 A1 ist eine optische Abtastvorrichtung bekannt, bei der eines der abbildenden Elemente als sphärischer, streifenförmiger Hohlspiegel ausgebildet ist.

Ferner ist aus der DE-OS 21 31 467 bereits eine Abtastvorrichtung mit geradliniger Lichtablenkung bekannt, die als Abtastelement eine schraublinienförmig gewundene, um die Schraubenachse drehbare Spiegelfläche aufweist.

Das Ziel der vorliegenden Erfindung besteht darin, eine Vorrichtung zur Erzeugung eines Lichtvorhanges mit einem abbildenden, streifenförmigen Hohlspiegel und einer in der Nähe des Brennpunktes des Hohlspiegels angeordneten Lichtablenkvorrichtung der eingangs genannten Art zu schaffen, bei der der Geradlauffehler mit geringem Aufwand praktisch voll ständig behoben ist.

Die Aufgabe wird nach der Erfindung dadurch gelöst, daß der ursprünglich sphärische, streifenförmige Hohlspiegel bezüglich einer sich im wesentlichen in Streifenrichtung erstreckenden Achse entsprechend einer definierten Funktion derart verwunden ist, daß jedes während einer vollständigen Abtastung vom Licht- bzw. Empfangsstrahl beaufschlagte Flächenelement des Hohlspiegels in einer zur Abtastrichtung senkrechten Ebene zumindest im wesentlichen im gleichen Winkel zur Strahlachse steht.

Der Erfindung liegt demnach insbesondere der Gedanke zugrunde, einen solchen Hohlspiegelstreifen einzusetzen, welcher in seiner Oberflächenform gezielt von der sphärischen Fläche abweicht, um den beschriebenen Geradlauffehler zu kompensieren. Durch die erfindungsgemäße Verdrehung des Hohlspiegelstreifens in sich ist dies auf einfachste Weise und ohne nenneswerten Mehraufwand bei dessen Herstellung möglich.

Vorzugsweise ist jede sich in Längsrichtung erstreckende Hohlspiegelhälfte jeweils entlang einer Schraubenlinie verdreht. Weist die den Geradlauffehler hervorrufende Teilkreisbahn in der Mitte des Hohlspiegelstreifens z. B. ein Auslenkmaximum und an den beiden Enden gleiche Auslenkminima auf, so verlaufen die die Verdrehung der beiden Spiegelhälften bestimmenden Schraubenlinien gegensinnig.

Bei einer Vorrichtung mit einem Spiegelrad als Lichtablenkeinrichtung ist gemäß einer bevorzugten Ausführungsvariante vorgesehen, daß die Verdrehung des ursprünglich sphärischen streifenförmigen Hohlspiegels derart auf die Größe und Lage des Spiegelrads abgestellt ist, daß der auftretende Geradlauffehler weitgehend kompensiert ist. Hierbei wird berücksichtigt, daß Lage (Verkippung), Größe und Form des Spiegel rades die sich ergebenden Unterschiede der Abstände der Lichtauftreffpunkte auf dem Spiegelrad zur Strahlungsquelle und zum Hohlspiegel bestimmen und damit die für den Geradlauffehler verantwortliche Kreisbahn beeinflussen.

Die Erfindung wird im folgenden anhand eines Ausführungsbeispiels unter Bezugnahme auf die Zeichnung näher erläutert; in dieser zeigt:

EP 0 408 920 A2

Fig. 1 eine teilweise geschnittene schematische Darstellung der erfindungsgemäßen Vorrichtung zur Erzeugung eines Lichtvorhangs, wobei der Schnitt senkrecht zur Abtastebene liegt,

Fig. 2 eine schematische Ansicht des Gegenstandes der Fig. 1 nach Linie I-I,

Fig. 3 eine schematische Draufsicht des in Fig. 2 gezeigten streifenförmigen Hohlspiegels, wobei lediglich eine der beiden Hohlspiegelhälften gezeigt ist,

Fig. 4 eine schematische Seitenansicht des in Fig. 2 gezeigten streifenförmigen Hohlspiegels in vergrößertem Maßstab, wobei der Strahlverlauf für zwei Spiegelradstellungen gezeigt ist, und

Fig. 5 eine Figur 4 vergleichbare Ansicht, in der zwei Flächenelemente des Hohlspiegels dargestellt sind, die zur Kompensation des Geradlauffehlers gegeneinander verkippt sind.

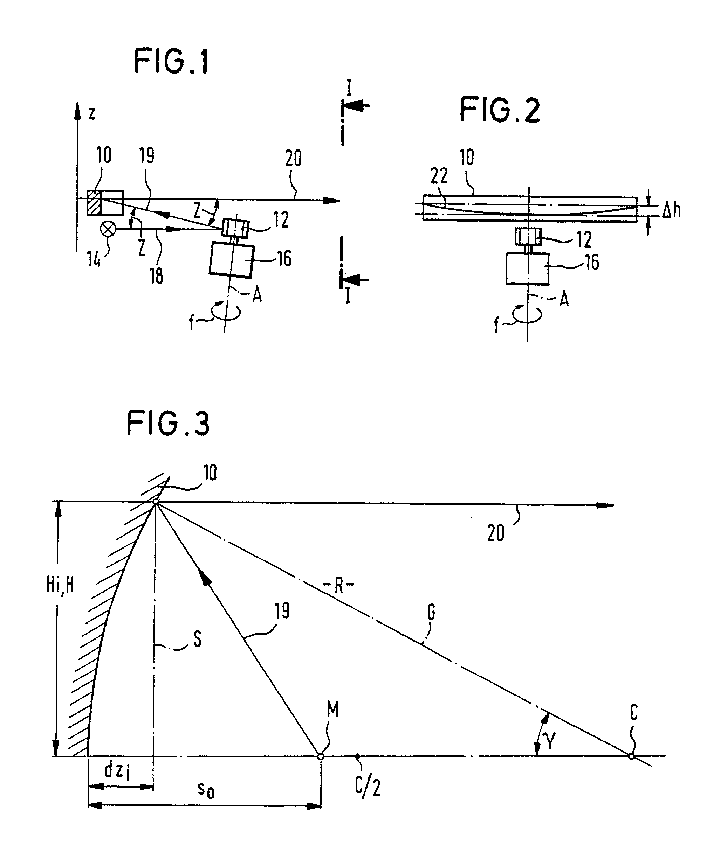

Nach den Figuren 1 und 2 erzeugt eine Strahlungsquelle 14 mit Hilfe hier nicht dargestellter optischer Mittel einen gebündelten Lichtstrahl 18, der auf die Oberfläche eines als Lichtablenkvorrichtung dienenden Spiegelrades 12 gerichtet ist, welches mit konstanter Drehzahl in Richtung des Pfeiles f umläuft. Das Spiegelrad 12 wird hierbei mittels eines Motors 16 angetrieben.

Die lichtreflektierende Oberfläche des Spiegelrades 12 befindet sich in der Nähe des Brennpunktes eines streifenförmigen Hohlspiegels 10, welcher erfindungsgemäß von der Sphäre abweichend gekrümmt ist. Die Längsrichtung des streifenförmigen Hohlspiegels 10 liegt senkrecht zur Drehachse A des Drehspiegels 12 und parallel zur allgemeinen Abtastrichtung. Die Drehachse des Spiegelrades 12 ist bezüglich einer zur Abtastebene senkrechten Geraden verkippt.

Das Spiegelrad 12 führt den von der Strahlungsquelle 14 kommenden gebündelten Lichtstrahl 18 periodisch über den sich allgemein in Abtastrichtung erstreckenden Hohlspiegel 10. Hierbei reflektiert der Hohlspiegel 10 die vom Spiegelrad 12 kommenden Lichtstrahlen 19 und erzeugt ein Austrittsbündel, d.h. den Fahrstrahl 20, welcher beispielsweise auf einen Retroreflektor gerichtet ist, der als Tripelspiegel ausgebildet sein kann. In diesem Fall wird das Licht in sich selbst zurückgeworfen und über den Hohlspiegel 10, das Spiegelrad 12 und einen Strahlenteiler (nicht gezeigt) zu einem photoelektrischen Empfänger (nicht gezeigt) gelenkt.

Im entstehenden Lichtvorhang erfolgt die Abtastung von dort befindlichen Gegenständen nach dem Fahrstrahlprinzip, d.h., es wird ein vorzugsweise von einem Laser erzeugter Fahrstrahl im Idealfall parallel zu sich selbst über den Lichtvorhang geführt. Ein solcher Lichtvorhang erstreckt sich senkrecht zur Zeichenebene der Fig. 1.

Gemäß Fig. 1 liegen die Strahlungsquelle 14 und das Spiegelrad 12 einerseits sowie der abbildende, streifenförmige Hohlspiegel 10 und der Lichtaustritt bzw. der Fahrstrahl 20 in zwei unterschiedlichen Ebenen. Dadurch soll eine Unterbrechung des Fahrstrahls durch die Abschattung des Spiegelrads vermieden werden. Mit einer solchen Anordnung kann demnach nicht nur die halbseitige, sondern die ganze Öffnung des Systems ausgenutzt werden. Durch diese Anordnung ergibt sich in einer zur allgemeinen Abtastebene senkrechten Ebene ein einen Z-Winkel bildender Strahlenverlauf für die Strahlen 18, 19 und 20.

Aufgrund dieses einen Z-Winkel bildenden Strahlengangs und der Tatsache, daß der Ursprungspunkt des Spiegelrads 12 nicht im Krümmungsmittelpunkt des Hohlspiegels, sondern in der Nähe des Brennpunktes angeordnet ist, bewegt sich der Scanstrahl entlang des sphärischen, streifenförmigen Hohlspiegels 10 nicht mehr auf einer Geraden, was den Idealfall darstellen würde, sondern auf einer Kreisbahn (22) (vgl. Fig. 2).

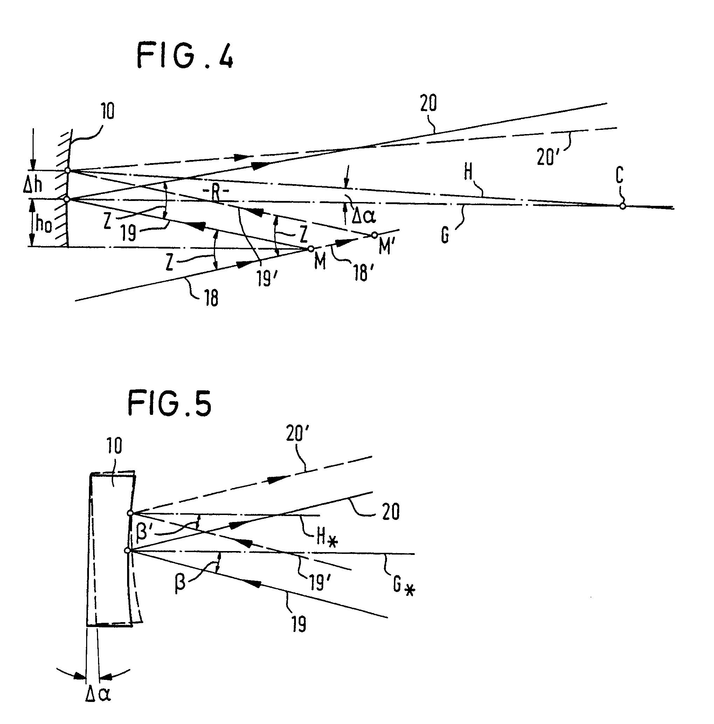

Aufgrund eines solchen Verlaufs des Scanstrahls auf einer Kreisbahn wird der vom Hohlspiegel 10 reflektierte Fahrstrahl (20) bezüglich der zur allgemeinen Abtastebene senkrechten Achse z (vgl. Fig. 1) mit unterschiedlichen Winkeln reflektiert. Da es sich hierbei um einen Winkelfehler handelt, wird mit zunehmendem Abstand vom Hohlspiegel 10 der Betrag der Abweichung größer. Dies geht beispielsweise aus der Darstellung gemäß Fig. 4 hervor.

Dort ist eine Figur 1 vergleichbare Seitenansicht des sphärischen, streifenförmigen Hohlspiegels 10 in vergrößertem Maßstab gezeigt. Es sind zwei Strahlverläufe 18, 19, 20 bzw. 18', 19', 20' für zwei unterschiedliche Stellungen des Spiegelrades dargestellt. Für die beiden Spiegelradstellungen ist die Stelle, an der der von der Strahlungsquelle kommende Lichtstrahl 18 bzw. 18' auf dem Spiegelrad auftrifft und als Lichtstrahl 19 bzw. 19' zum streifenförmigen Hohlspiegel 10 hin reflektiert wird, mit M bzw. M' bezeichnet.

Das Spiegelrad richtet den reflektierten Lichtstrahl 19 bei dem sich einstellenden Auftreffpunkt M, welcher dem Hohlspiegel 10 näher liegt als der Auftreffpunkt M', auf eine Stelle im linken oder rechten Randbereich des streifenförmigen Hohlspiegels. In diesen Randbereichen des Hohlspiegelstreifens beträgt die durch die Kreisbahn 22 bewirkte Abweichung des Lichtstrahls bzw. Fahrstrahls nach oben ein Maximum (vgl. auch Fig. 2). In Fig. 4 ist der vertikale Abstand zwischen dem Lichtauftreffpunkt M und der Stelle, an welcher der Lichtstrahl 19 auf den Hohlspiegel 10 auftrifft, mit $h_0$ bezeichnet. Eine durch den Auftreffpunkt auf dem Hohlspiegel 10 sowie den Krümmungsmittelpunkt C des Hohlspiegels verlaufende Gerade G bildet

3

EP 0 408 920 A2

die Winkelhalbierende zwischen dem auf den Hohlspiegel 10 auftreffenden Lichtstrahl 19 sowie dem vom Hohlspiegel reflektierten Fahrstrahl 20. Es ergibt sich hierbei ein sog. Z-Winkel-Strahlverlauf, bei welchem der Winkel zwischen dem von der Strahlungsquelle kommenden Lichtstrahl 18 und dem zum Hohlspiegel 10 gerichteten Lichtstrahl 19 in etwa gleich dem Winkel zwischen dem Lichtstrahl 19 sowie dem vom Hohlspiegel 10 reflektierten Fahrstrahl 20 ist.

Ergibt sich nach einer entsprechenden Verdrehung des Spiegelrads der Lichtauftreffpunkt M', so stellt sich der Strahlverlauf 18', 19', 20' ein, welcher zu einer Auftreffstelle des zum Hohlspiegel hin gerichteten Lichtstrahls 19' auf dem Hohlspiegel 10 führt, welche zum ersten Lichtauftreffpunkt auf diesem Hohlspiegel einen vertikalen Abstand $\Delta h$ aufweist (vgl. auch Fig. 2). Dieser Wert $\Delta h$ ist im vorliegenden Falle der maximale Wert der Abweichung der Fahrstrahlführung von einem geradlinigen Verlauf.

Wie in Fig. 4 zu erkennen ist, verlaufen bei den beiden Spiegelradstellungen die zum sphärischen, streifenförmigen Hohlspiegel 10 gerichteten Lichtstrahlen 19, 19' in etwa parallel zueinander. Aufgrund des auftretenden Geradlauffehlers gilt dies jedoch nicht mehr für die beiden Fahrstrahlen 20, 20'. Der Winkel zwischen den beiden Strahlen 20', 19' ist nämlich kleiner als der Winkel zwischen den vergleichbaren Strahlen 19 und 20. Verantwortlich dafür ist die sphärische Krümmung des streifenförmigen Hohlspiegels 10.

Die Winkelhalbierende zwischen den Strahlen 19' und 20' wird wiederum durch eine Gerade H definiert, welche durch den Krümmungsmittelpunkt C des Hohlspiegels 10 und die Strahlauftreffstelle auf dem Hohlspiegel 10 verläuft.

Der in Fig. 4 deutlich erkennbare Winkelfehler führt dazu, daß die Fehlerabweichung mit zunehmendem Abstand vom Hohlspiegel 10 größer wird.

Um zu erreichen, daß auch in größeren Entfernungen vom Hohlspiegel 10 noch ein gerader Ablauf des Fahrstrahls 20 sichergestellt ist, wird der ursprünglich sphärische, streifenförmige Hohlspiegel 10 erfindungsgemäß bezüglich einer sich im wesentlichen in Streifenlängsrichtung erstreckenden Achse S (vgl. Fig. 3) in sich derart verwunden, daß jedes während einer vollständigen Abtastung vom Lichtstrahl 19 bzw. 19' beaufschlagte Flächenelement des Hohlspiegels 10 in einer zur allgemeinen Abtastrichtung bzw. Abtastebene senkrechten Ebene (in Fig. 4 Zeichenebene) zumindest im wesentlichen im gleichen Winkel $\beta$, $\beta'$ (vgl. Fig. 5) zum Lichtstrahl 19 bzw. 19' steht.

Wie in Fig. 5 zu erkennen ist, sind beispielsweise die beiden Flächenelemente des streifenförmigen Hohlspiegels 10, auf welche die Strahlen 19, 19' (vgl. auch Fig. 4) auftreffen, derart um einen Winkel $\Delta\alpha$ gegeneinander verkippt, daß sie im gleichen Winkel zur Achse des Strahls 19 bzw. 19' stehen. Die Geraden $G_*$ und $H_*$ bilden wiederum die Winkelhalbierenden für die Strahlenpaare 19, 20 bzw. 19', 20'. Die beiden Geraden gehen hierbei jeweils durch den Krümmungsmittelpunkt der beiden gegeneinander verdrehten Flächenelemente des Hohlspiegels 10. Da diese Geraden gleichzeitig die Normalen zu den Flächenelementen bilden, geben die Winkel $\beta$ und $\beta'$ die Winkel an, in denen die Flächenelemente des Hohlspiegels 10 zur Achse des jeweiligen ankommenden Strahls 19 bzw. 19' stehen. Im vorliegenden Fall sind diese beiden Winkel zumindest im wesentlichen gleich groß. Der Winkel $\Delta\alpha$, um den die beiden in Fig. 5 gezeigten Flächenelemente des streifenförmigen Hohlspiegels 10 gegeneinander verdreht sind, ist gleich dem Winkel $\Delta\alpha$ zwischen den beiden durch den Krümmungsmittelpunkt und die beiden Auftreffpunkte auf dem Hohlspiegel verlaufenden Geraden G und H, welche sich bei noch nicht verdrehtem Hohlspiegel ergeben (vgl. Fig. 4). Fig. 5 zeigt deutlich, daß die beiden Fahrstrahlen 20, 20' beim erfindungsgemäß in sich verdrehten streifenförmigen Hohlspiegel 10 zumindest im wesentlichen parallel zueinander verlaufen, so daß auch in größeren Entfernungen vom Hohlspiegel 10 noch ein praktisch geradliniger Ablauf des Fahrstrahls bzw. Scanstrahls erzielt wird. Grundsätzlich ist jedoch auch eine solche Verdrehung des Hohlspiegels denkbar, daß sich die beiden Fahrstrahlen 20, 20' auf einer Abtastlinie z. B. auf einer Materialbahn oder dgl. schneiden.

Erfindungsgemäß wird demnach ein derartiger Hohlspiegelstreifen eingesetzt, welcher in seiner Oberflächenform gezielt von der sphärischen Fläche abweicht, um den beschriebenen Geradlauffehler zu kompensieren.

Nachdem beim in Fig. 2 dargestellten Beispiel der Ablauffehler gemäß der Kreisbahn 22 auf dem streifenförmigen Hohlspiegel 10 symmetrisch zu den beiden seitlichen Rändern hin abnimmt, werden die beiden Hohlspiegelhälften gegensinnig, und zwar jeweils entsprechend einer Schraubenlinie in sich verdreht.

Dazu läßt sich für jede in Streifenlängsrichtung bzw. in Abtastrichtung gemessene Höhe $H_i$ des streifenförmigen, ursprünglich sphärischen Hohlspiegels 10 jeweils ein solcher Torsionswinkel $\Delta\alpha$ bestimmen, daß die betreffenden Flächenelemente stets im gleichen Winkel zur Strahlachse stehen und damit der reflektierte Fahrstrahl 20 bzw. 20' unabhängig von der Höhe $H_i$ unter dem gleichen Winkel reflektiert wird.

Zur Ableitung der genannten Beziehung zwischen dem Torsionswinkel $\Delta\alpha$ und der Hohlspiegelhöhe $H_i$

4

ist in Fig. 3 eine schematische Draufsicht der einen Hälfte des in Fig. 1 bzw. 2 gezeigten streifenförmigen Hohlspiegels 10 dargestellt. Hierbei nimmt das Spiegelrad eine solche Stellung ein, daß der Lichtstrahl 19 von der Auftreffstelle M zum in Fig. 3 oberen Rand des streifenförmigen Hohlspiegels 10 hin gerichtet wird, um den Fahrstrahl 20 zu erzeugen. Die Winkelhalbierende zwischen diesen beiden Strahlen 19 und 20 wird wiederum durch die durch den Krümmungsmittelpunkt C des Hohlspiegels 10 und die Auftreffstelle auf dem Hohlspiegel verlaufende Gerade G gebildet. Der Abstand zwischen dem Krümmungsmittelpunkt C und dem Auftreffpunkt auf dem Hohlspiegel 10 ist gleich dem Krümmungsradius R des Hohlspiegels 10.

Wie aus Fig. 3 unmmittelbar zu erkennen ist, ist die halbe Spiegelöffnung durch den Winkel $\gamma$ bzw. die Höhe H bestimmt. Der Abstand zwischen dem Scheitelpunkt des sphärischen, streifenförmigen Hohlspiegels 10 und dem Auftreffpunkt M auf dem Spiegelrad ist gleich der Strecke $s_0$. Die Pfeilhöhe des Spiegelstreifens ist mit $dz_i$ bezeichnet und ist gleich dem Abstand zwischen dem Scheitelpunkt und dem Schnittpunkt zwischen der sich in Streifenlängsrichtung erstreckenden Geraden S und einer durch den Krümmungsmittelpunkt C und den Scheitelpunkt sowie den Auftreffpunkt M verlaufenden Geraden.

Der die um die Achse S vorzunehmende Verwindung des Hohlspiegels 10 bestimmende Torsionswinkel $\Delta\alpha$ ist gleich dem Winkel, welcher gemäß Fig. 4 bei noch nicht verdrehtem Hohlspiegelstreifen zwischen den Geraden G und H eingeschlossen ist.

Der den Geradlauffehler kompensierende Torsionswinkel $\Delta\alpha$ für die jeweilige Höhe $H_i$ des sphärischen streifenförmigen Hohlspiegels 10 ergibt sich nun aus der folgenden Beziehung:

$$\Delta\alpha = \arcsin \frac{\left(\left(\sqrt{H_i^2 + (s_0 - dz_i)^2} \cdot \cos z/2\right) \cdot \sin z/2\right) - h_0}{R} \quad \text{(vgl. Fig. 3, 4)}$$

$$\text{mit:} \quad 0 \leq H_i \leq H \quad , \quad H = \text{Halbe Spiegelöffnung (vgl. Fig. 3)}$$

$$Y = \arcsin \frac{H}{R} \quad \text{(maximaler Öffnungswinkel) (vgl. Fig. 3)}$$

$$s_0 = R - \frac{H}{\tan Y} + \frac{H}{\tan 2Y} \quad \text{(vgl. Fig. 3)}$$

$$dz_i = R - \sqrt{R^2 - H_i^2} \quad \text{(Tiefenabweichung) (vgl. Fig. 3)}$$

$$h_0 = s_0 \cdot \tan z/2$$

$$z = \text{Winkel zwischen den Strahlen 18 und 19, 19 und 20 sowie 18' und 19' gemäß Fig. 4}$$

Somit ergibt sich für jede in Längsrichtung des ursprünglich sphärischen, streifenförmigen Hohlspiegels 10 gemessene Höhe $H_i$ ein solcher Verdrehwinkel $\Delta\alpha_i$, bei dem das entsprechende Flächenelement derart verdreht wird, daß es stets im gleichen Winkel zur Strahlachse steht, und damit der reflektierte Strahl unabhänig von der Höhe $H_i$ unter dem gleichen Winkel reflektiert wird. Der sphärischen Form des streifenförmigen Hohlspiegels 10 ist demnach erfindungsgemäß eine Torsionsgröße überlagert, welche den in den Fig. 2 und 4 dargestellten Geradlauffehler nahezu vollständig über die Scanlänge kompensiert.

## Ansprüche

1. Vorrichtung zur Erzeugung eines Lichtvorhanges mit einem abbildenden, streifenförmigen Hohlspiegel (10) und einer in der Nähe des Brennpunktes des Hohlspiegels angeordneten Lichtablenkvorrichtung (12), welche einen von einer Strahlungsquelle (14) kommenden, gebündelten Lichtstrahl periodisch über den sich in Abtastrichtung erstreckenden Hohlspiegel führt und/oder einen Empfangsstrahl vom Hohspiegel empfängt und zu einem photoelektrischen Wandler lenkt, wobei Strahlungsquelle bzw. photoelektrischer Wandler und Lichtablenkvorrichtung einerseits sowie Hohlspiegel und Strahlaustritt bzw. -eintritt andererseits in unterschiedlichen Ebenen liegen,
dadurch **gekennzeichnet,**
daß der ursprünglich sphärische, streifenförmige Hohlspiegel (10) bezüglich einer sich im wesentlichen in Streifenrichtung erstreckenden Achse (S) entsprechend einer definierten Funktion derart verwunden ist, daß jedes während einer vollständigen Abtastung vom Licht-bzw. Empfangsstrahl beaufschlagte Flächenelement des Hohlspiegels (10) in einer zur Abtastrichtung senkrechten Ebene zumindest im wesentlichen im gleichen Winkel zur Strahlachse steht.

2. Vorrichtung nach Anspruch 1,
dadurch **gekennzeichnet,**
daß jede sich in Längsrichtung erstreckende Hohlspiegelhälfte jeweils entlang einer Schraubenlinie verdreht ist.

3. Vorrichtung nach Anspruch 1 oder 2 mit einem Spiegelrad (12) als Lichtablenkeinrichtung,
dadurch **gekennzeichnet,**
daß die Verdrehung des ursprünglich sphärischen, streifenförmigen Hohlspiegels (10) derart auf die Größe und Lage des Spiegelrads (12) abgestimmt ist, daß der auftretende Geradlauffehler weitgehend kompensiert ist.

# FIG.1

# FIG.2

# FIG.3

## FIG.4

## FIG.5